# EUROPEAN PATENT SPECIFICATION

(11) **EP 2 683 899 B1**
(45) Date of publication and mention of the grant of the patent: **14.09.2016**
(21) Application number: 12754751.1
(22) Date of filing: 08.03.2012
(51) Int. Cl.: E06B 3/32, E06B 9/02, E06B 9/26, F04D 25/14, F24J 2/24, E06B 7/084, E06B 7/02, E06B 9/386, F04D 25/06, F04D 29/60, F24J 2/04, F24J 2/20, F24J 2/40

(54) **A WINDOW SHUTTER UNIT FOR EXTERNAL MOUNTING ON A BUILDING**
FENSTERROLLADENEINHEIT ZUR AUSSENMONTAGE AN EINEM GEBÄUDE
ENSEMBLE VOLET DE FENÊTRE POUR MONTAGE EXTÉRIEUR SUR UN BÂTIMENT

(30) Priority: 10.03.2011 DK 201170117
(43) Date of publication of application: 15.01.2014
(73) Proprietor: Venetian Solar APS, 2970 Hørsholm (DK)
(72) Inventor: THIELEMANN, Stefan, DK-2970 Hørsholm (DK)
(74) Representative: Awapatent A/S
(86) International application number: PCT/DK2012/050072
(87) International publication number: WO 2012/119604

(56) References cited:
- WO-A1-83/00378
- WO-A2-2007/132363
- WO-A2-2008/095502
- JP-A- 2006 307 597
- KR-A- 20110 034 500
- US-A- 4 191 165
- US-A- 4 327 795
- US-A- 4 327 795
- US-A- 4 330 047
- US-A- 4 330 047
- US-A- 4 508 154
- US-A- 5 221 363

## Description

The present invention relates to a window shutter unit for external mounting on a building, which window shutter unit comprises a plurality of hollow slats mounted to frame members in a shutter frame, an air outlet opening for delivering ventilation air to a room in the building, and a fresh air inlet system for taking in outside air and conveying the air to the air outlet opening. The present invention further relates to a building provided with a plurality of such window shutter units.

Window shutters have been known for many years, and they are used to provide shade or privacy. It has also for many years been known to use external units for ventilation and heating. An early example is given in US patent US 246 626 A. A casing mounted on the outer wall has a series of inclined surfaces and glass is mounted in front of the surfaces. Air from inside a room can circulate into the lower part of the casing, be heated by sun energy within the casing and be returned into the room at the upper end of the casing. When fresh outside air is needed, a fresh air inlet opening can be opened at the bottom of the casing. In US 4 327 795 A a similar casing system has been combined with a window shutter into a window shutter unit comprises a plurality of hollow slats mounted to two side members in the shutter casing. There is an upper air outlet opening for delivering ventilation air to a room in the building, and at the bottom of the casing a fresh air inlet for taking in outside air and conveying the air through the casing to the air outlet opening. The air is heated while flowing up through the casing. The hollow slats have a central pipe section and fins extending to both sides. One side of the pipe section is perforated. In winter time heating of the air is provided by the sun warming the casing and the air flowing around the slats, and in summer time the casing provides shade and thus a cooling effect. There is no active cooling involved.

A rather large number of window shutters mounted inside the exterior window are known, such as in US 4 301 787 A where the slats are arranged in a venetian louvre system and room air can circulate through the shutter casing; and in US 4 655 195 A where the slats are vertical and room air can circulate through the shutter casing. Other window shutters mounted inside the exterior window are known to be integrated with closed-circuit heating/cooling systems based on water, such as in US 4 527 548 A where a radiator in the room is used to heat air; US 4 144 931 A where water flowing in pipe sections of slats are used to cool or heat the air; and the patent publication DE 26 24 646 A1 where water flowing in pipe sections of slats is heated and used for heating purposes. In US 4 191 165 A a sun shield of pallets may warm liquid which is passed to a heat exchanger. WO 2007/132363 mentions thermal solar receptors formed as elliptical transparent tubes and a solar tracking system. WO 83/00378 relates to a solar window apparatus with automatic adjustment of vanes. US 4 330 047 relates to a ventilation louver with profiled slats for noise attenuation.

Modern buildings are highly insulated and require less heating than older buildings. An object of the present invention is to provide the buildings with improved ventilation.

According to the present invention the initially mentioned window shutter unit for external mounting on a building is therefore characterized in that at least a first one of the frame members of the shutter frame is hollow with an interior forming part of a common flow passage leading to the air outlet opening, that the fresh air inlet system comprises air inlet openings in the hollow slats, and a first air flow passage from the individual slat to the common flow passage, which first air flow passage is located at the end of the individual slat and extends to the interior of the first frame member.

The fresh inlet air from outside the building is drawn in through the inlet openings in the hollow slats and into the interior of the slats where the inlet air flows in the length direction of the individual slat to the first air flow passage and at the same time the inlet air is heated by the sun energy. Within the slats the fresh air is close to the inner surface of the slat and heat is thus effectively transferred from the slat wall material to the air to heat the same. The construction of the window shutter unit is much more simple than in the prior art shutter units for warming fresh air, because there is no requirement for a casing with a glass pane in front of the slats. According to the present invention the fresh air is heated when flowing inside the slats, and the slats may consequently be fully exposed to the outside air. From an architectural point of view the window shutter unit can thus look the same as traditional shutters where the slats and the shutter frame are what spectators see on the exterior of the building facade. In case a glass facade is required, then it is naturally possible to add an outer glass pane onto the window shutter unit, but it is not required for the unit to provide its function.

At least a first one of the frame members of the shutter frame is hollow with an interior forming part of the common flow passage, and the first air flow passage is located at the end of the individual slat and extends to the interior of the first frame member. Although it is possible to provide each slat with an outlet connected to pipe or tube running across the slats as a common collecting pipe, it is much simpler to utilize the frame member of the shutter frame as a common collecting means receiving the fresh air from the slats and directing the air flow part of the way towards the air outlet opening.

In a further development also a second of the frame members of the shutter frame is hollow, and a second air flow passage is located at an end of the individual slat and extends to the interior of the second frame member. When both the first frame member and the second frame member are hollow and there is an air flow passage at either end of the individual slat then the frame members can be of identical design - but mounted in mirrored positions in the shutter frame, and the slats can have similarly shaped ends and be mounted in the same manner in the two opposed frame members. As an alternative the slats may have the first air flow passage at one end and be completely closed at the other end.

A modern, highly insulated building is very tight and devoid of air leaks. Ventilation of air out of the rooms in the building is thus required in order to remove CO₂ and odour and possible heat from the room. Separate ventilation systems may be applied for this purpose, but this requires ventilation ducts and other equipment which typically are installed in a separate portion of the storey partition in the building. In a room where e.g. normal office work is performed the required air exchange per hour should at least correspond to the volume of the room and other room types require a higher air exchange rate. In order to provide air exchange the window shutter unit according to the invention may comprise an air discharge opening for ventilating air out of the room in the building, and a discharge passage from the air discharge opening to an external air discharge.

In some situations, such as when a room is unoccupied during winter time, it may be an advantage to be able to re-circulate room air via the slats in the window shutter unit in order to heat the air in the room. In an embodiment the window shutter unit comprises a flow control device directing air ventilated out of the room through the air discharge opening either through the discharge passage to the external air discharge or through a recirculation passage including the interior of the second frame member. From the second frame member the re-circulated air flows through the second air flow passages into the slats where the heat from the sun heats the air. The flow control device is regulated according to the current needs in the room for heating or discharge of air.

In a further development of the embodiment having a discharge passage, a heat exchange device is included in the discharge passage and the common flow passage. The heat exchange device extracts heat from the air ventilated out of the room via the discharge passage and delivers heat to the fresh air flowing towards the room in the common flow passage. The heat exchange device may be of counter-flow type, such as a recuperator.

In an embodiment the window shutter unit comprises solar cell devices for producing electrical energy to drive at least one electric fan motor in the window shutter unit. The solar cell devices reduce the need for supply of electric power.

In an embodiment the window shutter unit comprises a heat energy device to cool or heat air, which heat energy device is in flow connection with the common flow passage leading to the air outlet opening. The heat energy device may e.g. be connected with an energy storage unit and used to extract heat from the sunlight and store the heat during the day, and then during the night use the stored heat to warm the air ventilated into the room. The heat energy device may alternatively be of the sorption type that may utilize excess heat from solar energy to cool the fresh air before ventilation into the room. This saves electricity otherwise spent for cooling air.

Preferably at least some of the slats can rotate with respect to the frame members and thus adjust their inclination with respect to the sun in order to optimize the heat inflow on the slats, or in order to increase the light intensity in the room, or in order to increase electric power generation, or to achieve a mixture of these effects.

It is optionally possible to increase the heating of the air by providing at least some of the slats with an outer side wall of transparent material, preferably so that the outside air has to flow under and across the transparent material in order to reach the air inlet openings in the slat.

If there is a demand for more electric power it is possible to provide at least some of the slats with solar film devices for producing electrical energy.

In an embodiment the window shutter unit comprises a stationary part for mounting on the building and at least one shutter frame part capable of moving with respect to the stationary part between a position next to the window and a position in front of the window. In this manner the shutter frame part can be positioned next to the window when a free view through the window is desired. Alternatively, the shutter frame part can be stationary mounted on the facade either in front of the window or next to the window.

In an embodiment fans and control motors in the window shutter unit are supplied entirely with electrical energy produced by the window shutter unit. The window shutter unit is thus independent of electric power supply from the building.

The air inlet openings in the slats can be located anywhere on the individual slat, but some positions do have advantages over others. In a typical slat, two sides of the individual slat extend between an upper edge area and a lower edge area. From a manufacturing point of view it is an advantage when the air inlet openings in the slat are located in one of the edge areas. The slats are typically manufactured of thin material, which in flat areas may quite easily be deformed. The edge areas have higher stiffness than the flat areas, and manufacturing of the air inlet openings in the edge areas thus involves a lower risk of deforming the material in the area around the opening. Location of the air inlet openings at the edge area of the slat has the additional advantage that air entering into the slat through the openings will have to flow across the full area of the flat side of the slat. It is preferred that the air inlet openings are located in the lower edge area of the slat. At the lower edge area the risk of drawing in water together with the air is very low, partly because the water tends to run downward in direction of gravity, partly because edges or curvature in the material may cause water to be released from the surface, especially if the surface material of the slat in the lower edge area is hydrophobic. The individual slat can be provided a single air inlet opening or with two or more air inlet openings. The at least one air inlet opening can be elongate, such as a slit-like opening.

The present invention also relates to a building supplied on one or more facades with a plurality of window shutter units of the above-mentioned kind according to the present invention, wherein a central control unit controls window shutter units to regulate the ventilation, the temperature and the amount of daylight in one or more of the rooms. Delivery of ventilation from the shutter units provides a simplification because ventilation ducts and separate ventilation units can be minimized or avoided.

The building preferably has one or more of the rooms with no other built-in heating and/or ventilation system than the window shutter units. The storey height in a building is typically composed of the floor-to-ceiling height plus the ventilation portion height of the storey partition plus the partition height. The ventilation portion height may be about 60 cm, the partition height 15 cm, and the storey height 310 cm. By dispensing with the ventilation portion a saving in building height of almost 20 % can be obtained.

Examples of embodiments are described in more detail in the following with reference to the highly schematic drawings, on which
Fig. 1 illustrates a perspective view of a window shutter unit according to the present invention,
Figs. 2 and 3 are two different embodiments of air flow passages in a first frame member of the window shutter unit in Fig. 1,
Figs. 4a to 4d are four different embodiments of slats of the window shutter unit in Fig. 1,
Fig. 5 illustrates a cross-section through the window shutter unit in Fig. 1,
Figs. 5a to 5c are cross-sections through three different embodiments of slats of the window shutter unit in Fig. 1,
Figs. 6, 7, 9 and 15 are four different embodiments of contents in a housing of the window shutter unit in Fig. 1,
Figs. 8a and 8b are two illustrations of a fifth embodiment of contents in a housing of the window shutter unit in Fig. 1, viewed in two different operating states,
Fig. 10 illustrates a front view of a window shutter unit according to the present invention, mounted on the facade,
Fig. 11 illustrates a perspective view of a facade having a plurality of the window shutter units,
Fig. 12 illustrates in vertical section a room in a building having a window shutter unit outside a window,
Fig. 13 is a part-sectional view of slats in a window shutter unit according to the present invention, and
Fig. 14 illustrates facades of a building having a plurality of the window shutter units.

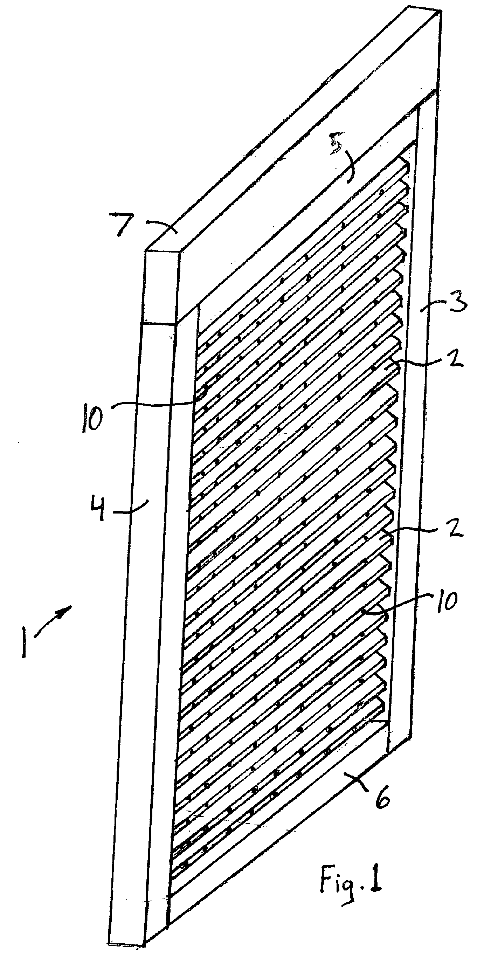

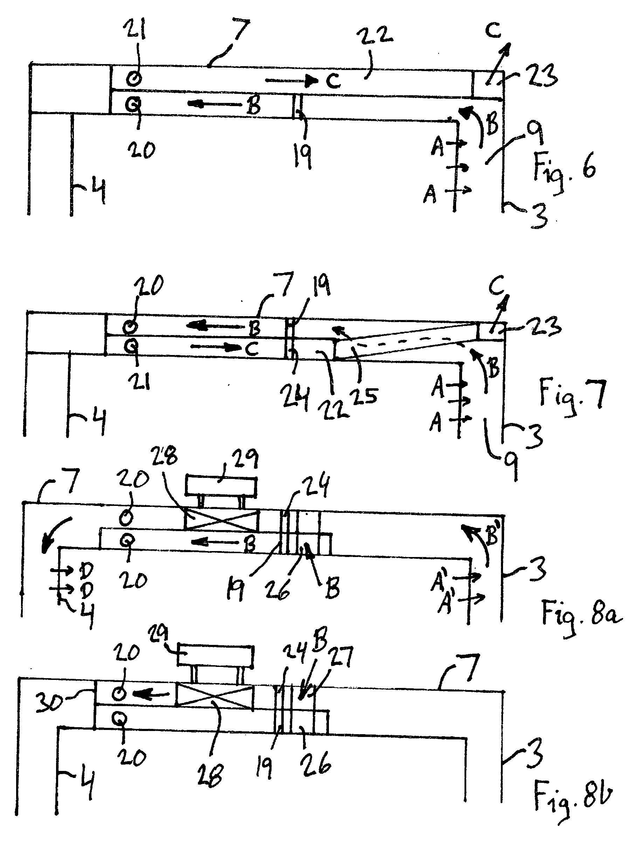

A window shutter unit is generally designated 1 in Fig. 1 and has a stationary part and a frame part, which frame part has a first frame member 3 and a second frame member 4 held in parallel and spaced apart by a third frame member 5 and a fourth frame member 6. A stationary part or housing 7 to be stationary mounted on the facade of a building may be a member separate from the third frame member 5, or the housing and the third frame member may be integrated into a single member (illustrated in Fig. 6). Elongate slats 2 extend between opposed pairs of frame members. In Fig. 1 the slats extend horizontally between the first frame member and the second frame member, but they can likewise extend vertically between the third frame member and the fourth frame member, or obliquely between e.g. the first frame member and the fourth frame member.

In the following description of different embodiments, for the sake of simplicity the same reference numerals are used for details of the same type, and only differences with respect to previously described embodiments are described.

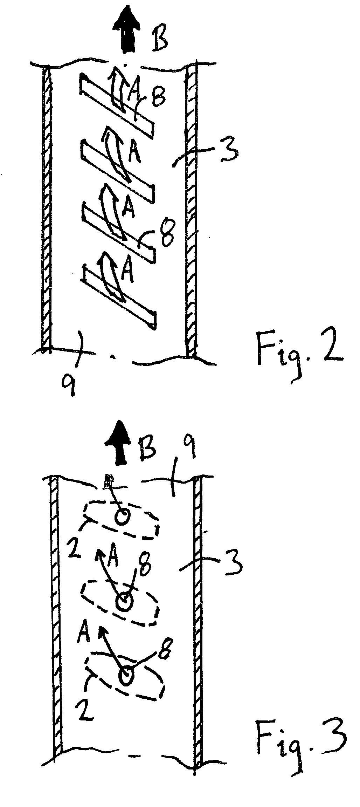

The slats can be mounted to the frame member in several different manners. In the embodiment illustrated in Fig. 2 the slats are fixed to the frame member, such as by welding or gluing or mounting with a fixture, so that an open end of the slat surrounds and covers an elongate first air flow passage 8 formed in the side wall of the first frame member 3. Fig. 2 illustrates the inside of this side wall and the slats are thus hidden behind the side wall and extend so to say down into the paper. Air from within the hollow slat can flow through the air flow passage 8 and into the interior of the first frame member as is illustrated by arrows A. The interior of the first frame member is part of a common flow passage 9 collecting the individual air flows from the slats and guiding the resulting common air flow in direction of arrow B. At the upper end of the first frame member the common flow passage continues to an air outlet opening 20, such as by being defined within housing 7 as illustrated e.g. in Fig. 6.

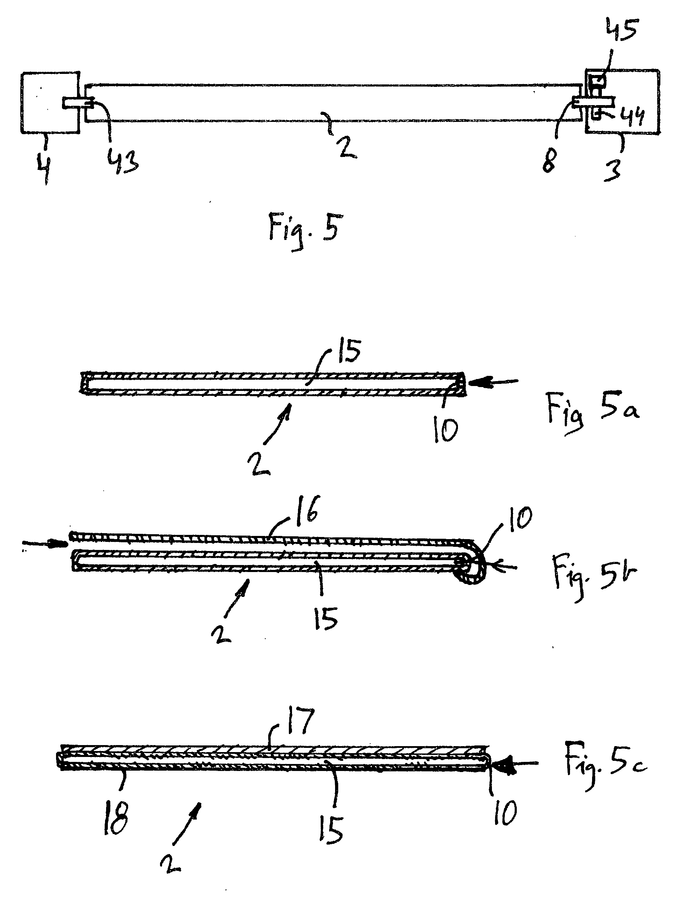

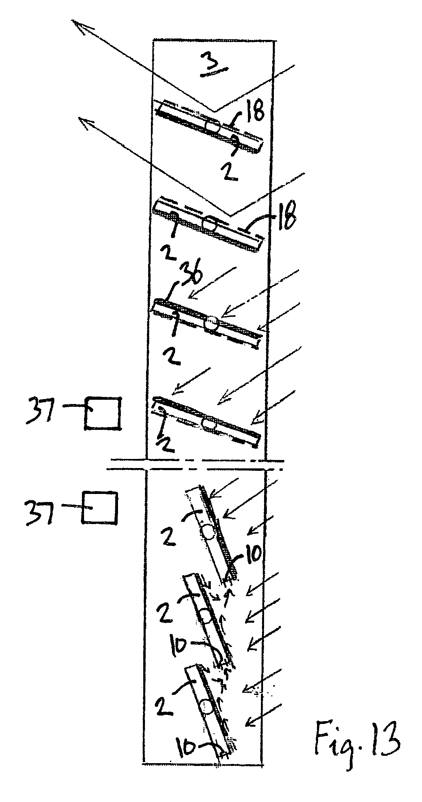

In the embodiment of Fig. 3 the slats are mounted so that they can rotate about an axis extending through the mountings to the frame members at the opposed ends of the individual slat. Each slat has at either end a mounting connected with the frame member. The mounting can take different shapes, such as a pin received in a recess on the frame, a tube extending through the side wall of the frame member with a possibility of rotating with respect to the side wall, or a tube fittingly positioned around another tube fixed in and extending through the side wall of the frame member. The air flow passage 8 extends centrally through the tube. This is also illustrated in Fig. 5 where the air flow passage 8 is extending through the tube extending through the side wall of the first frame member 3. This tube is fixed in the end of the slat 2 and is within the frame member provided with a sprocket 44 engaging a drive 45, such as a toothed bar or a chain, capable of rotating the tube and together with it the slat 2, so that the slat changes angular positioning with respect to the frame member. Fig. 13 illustrates slats located in two different angular positions - in the upper portion the slats are rotated to face more upwards than in the lower portion where the slats are facing almost horizontally.

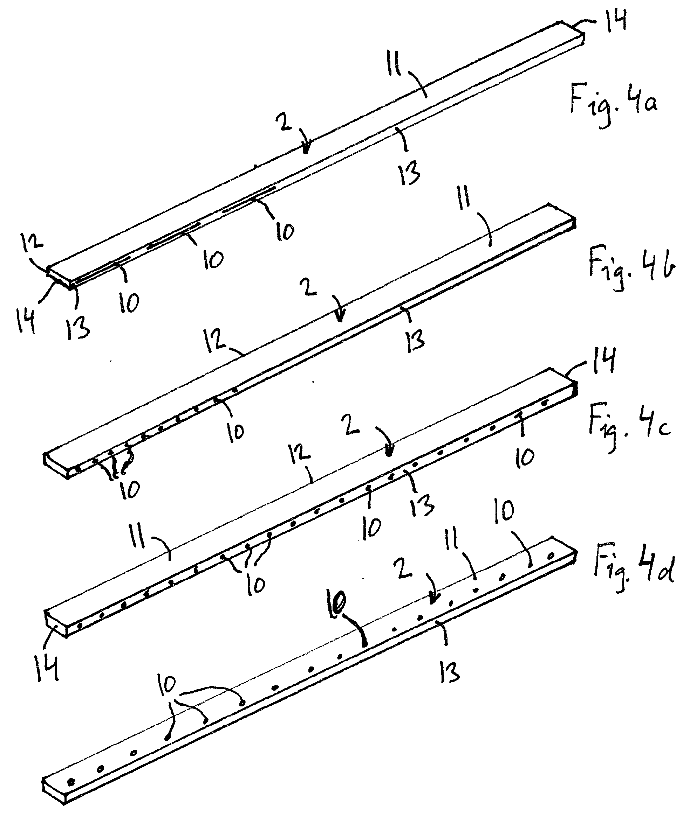

The slats are provided with air inlet openings 10. The individual slat has two sides 11 extending between two opposed ends 14 of the slat. The sides 11 are spaced apart so that a hollow free volume is present within the slat. Along their longitudinal edges the sides are connected via an upper edge area 12 and a lower edge area 13, and the free volume within the slat preferably extends between the two edge areas 12, 13. The volume within the slat may, however, include stiffeners or internal walls. The sides 12 illustrated in Figs. 4a - 4d are flat, but they can also be curved, such as into a slat 2 having the shape outlined in Fig. 3. The slats are elongate. In the slat of fig. 4a the air inlet openings 10 are elongate slits through the lower edge area 13, and the slits are located as distant as possible from the end 14 having the first air flow passage, so that the air has to flow along a large distance inside the slat and thus flows across a large area of the side being warmed by the sun during daytime. The slat 2 can have two slits or even only one slit or more than the three slits illustrated in Fig. 4a. In an embodiment slat 2 has two or three elongate slits evenly distributed over the length of the slat. The individual slit can have a width of about 2 mm, but has preferably a width of about 1.5 mm or less in order to prevent insects from entering through the slit. In the slat of fig. 4b the air inlet openings 10 are holes, such as bore holes, in the lower edge area 13, and these holes are located as distant as possible from the end 14 having the first air flow passage. The slat of fig. 4c has similar holes in the lower edge area 13, but evenly distributed along the length of the slat. In the embodiment of Fig. 4d the air inlet openings 10 are holes located in the side 11 of the slat and distributed along the length thereof. The slats can have other shapes, such as a rounded or pointed lower edge area. It is also possible to locate the air inlet opening 10 in end 14 opposite the end having the first air flow passage. Such an opening in end 14 can be provided in addition to other air inlet openings in the slat, or it can be provided as the sole air inlet opening in the slat. In an embodiment where a sole air inlet opening is provided in the slat this opening may typically have a size larger than about 1.6 mm, such as a size of several mm, and in order to prevent insects from entering, a filter may be provided upstream of the opening. The filter may be common to a plurality of slats, such as all the slats in the shutter frame, and can be positioned at a general intake opening so that outside air may flow through the general intake opening and via the filter onwards along a distribution path to the air inlet openings in the slats. As an example the general intake opening can be located in fourth frame member 6 or in second frame member 4, and the interior of second frame member 4 can be used as distribution path for filtrated outside air to air inlet openings in the slats.

A simple embodiment of a slat is illustrated in Fig. 5a. A row of air inlet openings 10 is provided in the lower edge area at the right hand side of the cross-section through the slat and an arrow illustrates that ambient air is drawn in through these openings and into the interior 11 of the slat. Inside the slat the air flows in the length direction of the slat towards the end having the first air flow passage. Sunlight shining onto the upper side of the slat heat up the material of the upper side slat, and the heat is transmitted through the material to the inner surface facing interior 15 in which the air is heated. The side of the slat can be matted or provided with a dark surface coating, like paint, in order to increase the absorption of energy from the sunlight.

The slat material may be of a metal like aluminum, iron, steel or cupper, providing heat transmission to the interior of the slat, or at least the side facing upwards may be of transparent material, such as a rigid plastic like polystyrene having a light transmission through the material of higher than 85 %, or such as glass. Air has rather low heat conductivity, and may therefore be advantageous to design interior 15 with much larger width than height, so that the inner distance between edge areas 12, 13 is e. g. at least four times larger than the inner distance between the sides 11, such as in the range from 5 to 30, or in the range from 6 to 15.

In the embodiment of Fig. 5b the slat is provided with an outer side wall 16 mounted upon the slat so that ambient air (fresh air) has to flow through the airspace between side 11 and outer side wall 16 in order to reach the air inlet openings 10 and flow into interior 15. This increases the distance through which fresh air has to flow while being heated, and thus the resulting temperature is increased of the air flowing through first air flow passage 8. The outer side wall can be of a metal or another sturdy material, but outer side wall can alternatively be of a transparent material like glass or polystyrene or polycarbonate. In the latter case the transparency on the one hand allows sunlight to pass through and heat side 11, and on the other hand heat transmitted from side 11 towards wall 16 will be reflected back onto side 11 by the wall 16. So, outer side wall 16 not only increases the length of travel of the fresh air but it also causes a higher temperature of side 11 for a given intensity of sunshine, and both factors increase the heating of the air in interior 15.

In the embodiment of Fig. 5c the slat is on side 11 provided with a solar film device 17, such as a device comprising photovoltaic cells made of photovoltaic material deposited on a substrate. The photovoltaic material can e.g. be amorphous silicon, microcrystalline silicon, nanocrystalline silicon, or a material like cadmium telluride, organic solar cell material or dye-sensitized solar cell material. The solar film device 17 can be adhered onto side 11 and is flexible so that it follows any curvature of side 11. Solar film device 17 is electrically connected to a device consuming or storing electric power. One advantage of providing the solar film device on the side of the slats is the size of the area, as the areas of the slats add up to a larger area than the area of the window, and another advantage is the ability of the slats to be rotated so that the side 11 faces the incoming sunlight. The solar film device may be partly transparent, and then it may also be mounted on the outside of outer side wall 16 (not shown in Fig. 5b).

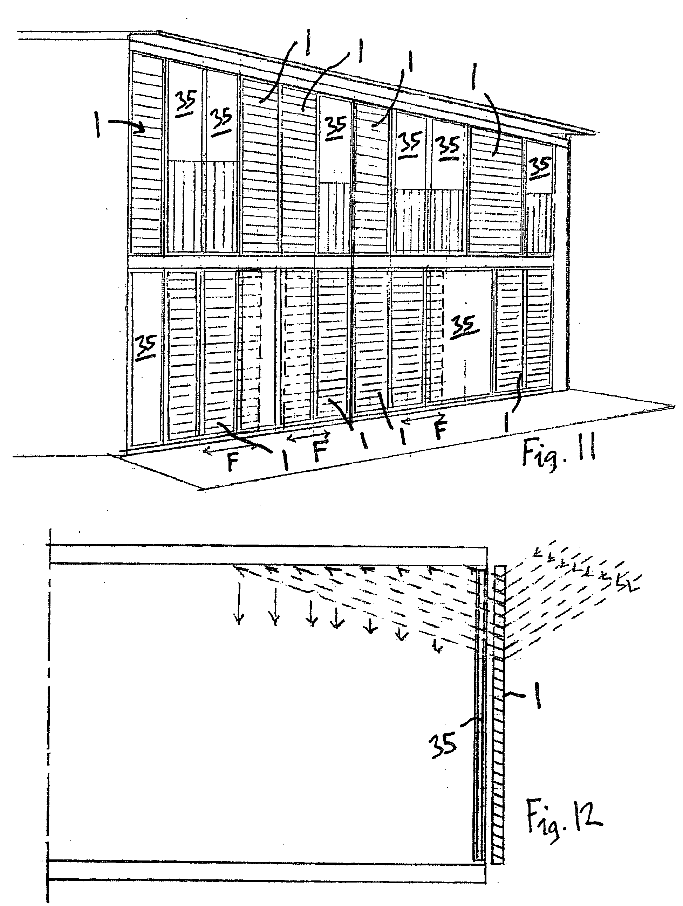

In fig. 5c the lower side of the slat is provided with a reflective surface 18. Such a reflective surface covering on the slat can be used for different purposes. In case heating of the fresh air is undesired and the window shutter unit is to block the light from entering the window, then the slats may be rotated so that the reflective surface 18 is facing outwards against the sunlight, which will then be reflected, and at the same time the room behind the window will receive only little natural light. In case the light intensity from natural light in the room is to be increased, the slats - or some of the slats - in the window shutter unit may be rotated to a position, in which the incoming sunlight is reflected into the room provided with the window. This is illustrated in the upper portion of Fig. 13, where an upper section of slats are positioned for reflection sunlight onto the ceiling of the room and a lower section of slats are rotated into a position for maximum energy absorption from the sunlight. The effect of using an upper section of slats to reflect sunlight onto the ceiling of the room is also illustrated in Fig. 12. The sunlight reflected from the slats is seen to pass window 35 and be directed up onto the ceiling where it is reflected downwards to provide the room with a very pleasant, soft illumination. The resulting increase in light intensity within the room may make it possible to dampen the use of artificial lightening, and thus result in a saving in power for lightening the room. When slats are in a position with the reflective surface facing outwards, the sunlight cannot deliver any significant energy to the slat material if most of or all the sunlight is reflected. If the reflective surface on the slats is permitting a part of the energy in the sunlight to heat the slat material then it is naturally possible to utilize this energy to heat air within the slats. The slats then have the double function of minimizing the incoming light in the room and of heating air by sunlight.

The window shutter unit 1 can be configured in many different manners. Some possible embodiments are described in the following with a schematic illustration of details, but other configurations are possible. Fig. 6 relates to an embodiment where fresh air supply is needed, and discharge of air from the room is needed, and there is no need or only little need for recovering heat energy from the discharged air. The first frame member 3 is in flow communication with housing 7, and a first fan 19 sucks fresh air into the interiors 15 of the slats and onwards into the common flow passage, which from the first frame member continues in direction of arrow B via the first fan 19 and onwards to an air outlet opening 20, through which the fresh air is ventilated into the room. An internal wall in housing 7 divides a discharge passage 22 from common flow passage 9. The fresh air ventilated into the room creates an overpressure that ventilates discharge air - illustrated by arrow C - out through an air discharge opening 21 from the room to the discharge passage and onwards out to the exterior of the building through external air discharge 23, which is located in housing 7.

Fig. 7 embodies a further development of Fig. 6 where there is need for recovering heat energy from the discharged air. In order to keep external air discharge 23 at the upper right hand corner of housing 7 the discharge passage 22 has been located below the common flow passage 9, and consequently air outlet opening 20 is located above air discharge opening 21. A second fan 24 in the discharge passage extracts air from the room and directs the discharge air through a heat exchange device 25, which extracts heat from the discharge air and delivers the heat to the fresh air flowing in through the common flow passage 9. The heat exchange device 25 can be an energy recovery heat exchanger of the counter-flow type, such as a recuperator.

Figs. 8a and 8b illustrate an embodiment adapted for use when there is a need for storing energy because in some periods surplus energy is at hand, and in other periods there is a demand for using energy. A heat energy device 28 is located is located in housing 7 in the flow passage leading to the upper of the two air outlet openings 20.

In the operating mode illustrated in Fig. 8a fresh air is supplied to the room by the first fan 19 drawing fresh air in through a first air intake 26 into a short flow passage leading to the lower of the two air outlet openings 20. In this operating mode the short flow passage is closed at either end of the passage. The closures may be permanent, such as fixed end walls, or temporarily by mounting a gate or other operable closure means that can be controlled to be in either a closed position or an open position. The upper flow passage with the heat energy device 28 has a controllable gate 30 or other operable closure means being in open condition to allow air flowing through heat energy device 28 to continue the flow past the upper air outlet openings 20, which opening is closed off by a control means (not shown) when gate 30 is open, and onwards down into the interior of the second frame member 4, said interior being part of a recirculation passage when gate 30 is open. From the second frame member 4 the air passes through second air flow passages 43 in the ends of the slats opposite the ends having the air flow passages 8. In the individual slat air is thus allowed to circulate into the interior 15 through the second air flow passage 43, illustrated by arrows D, and out of the slat through air flow passage 8, illustrated by arrows A'. In this operating mode the second air flow passages 43 act as recirculation passages. The recirculating air passes through heat energy device 28 where heat can be delivered during daytime or heat can be consumed during nighttime, and an energy storage unit 29, located within the building, is connected with device 28, such as via a fluidum flow circuit transporting heat between storage unit 29 and device 28. It is thus possible during nighttime when the ambient temperature is low, to cool storage unit 29, or it is possible during daytime when the ambient temperature is high, to heat storage unit 29. In this operating mode the second fan 27 operates as a recirculation fan.

In the operating mode illustrated in Fig. 8b fresh air is supplied to the room by the second fan 24 drawing fresh air in through a second air intake 27 into a short flow passage leading to the upper of the two air outlet openings 20. Gate 30 is closed and the control means in air outlet opening has set upper air outlet opening 20 in the open state. The air from the second air intake 27 flows through heat energy device 28, in which the air is cooled if the storage unit 29 has been cooled during nighttime, or heated if the storage unit 29 has been heated during daytime.

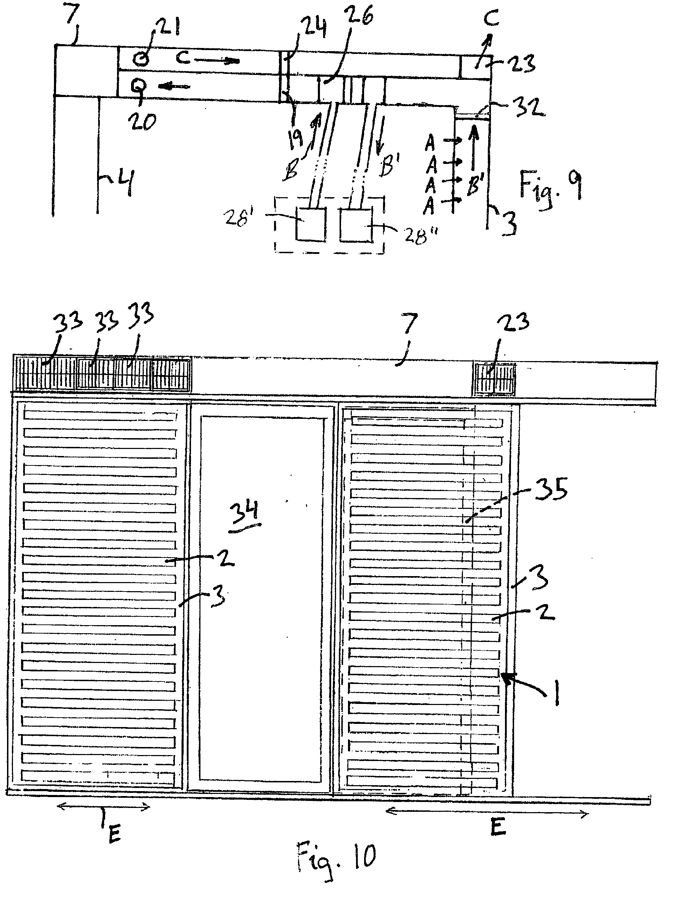

The embodiment of Fig. 9 is directed to the situation where ambient heat is used to cool ambient air before the air is ventilated into the room. The air drawn into and heated within slats 2 flows in direction of arrows A into first frame member 3 and continues in a common flow in direction of arrow B' up into housing 7 where the air flows out of housing 7 through an air discharge opening as indicated by arrow B' and into a collecting pipe receiving heated air from many window shutter units operating in parallel to supply heated air to a first part 28" of heat energy device 28, which in this embodiment is an installation in the building. The number of window shutter units may e.g. be selected so that the flow of heated air through the first part 28" amounts to at least 2000 m³/h, such as 5000 m³/h or more. A second part 28' of heat energy device 28, installed centrally for the number of window shutter units, cools fresh air, which is distributed to the individual window shutter units via a distribution pipe. The fresh air from the distribution pipe is ventilated in through first air intake 26 and flows through first fan 19 and onwards through air outlet opening 20 into the room. The first part and the second part of the heat energy device are part of a sorption-assisted air cooling system. In the first part 28" the heated air is utilized to condition a sorbent so that it by desorption regenerates and can be supplied via conduit 31 to the second part 28'. In the second part 28' the sorbent is utilized by sorption to cool fresh air flowing in through the second part 28'. The heat energy device may also be of the adsorption type which is a common alternative to sorption.

The window shutter unit is mounted on the facade of a building, and the housing 7 can be fixed to the facade at a suitable place, such as above one or more windows or a door, as illustrated in Fig. 10. The stationary housing 7 has in this example two frame parts mounted to the housing at their upper end and supported by a fixture at their lower ends. Each frame part may slide in direction of arrows E. The left hand frame part has been shifted to the left so that the door is free and can be opened, whereas the right hand frame part is in a position in front of window 35. If more light is needed in the room, the right hand frame part can be shifted to the right to a position where the window is free. Solar cells 33 are mounted on the housing in order to produce electric power.

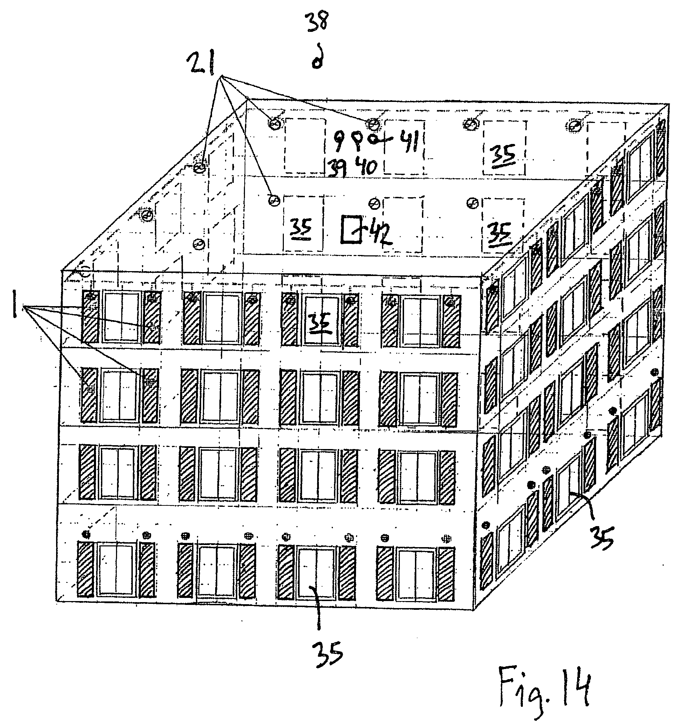

A facade of a building may have many window shutter units 1, as illustrated in Fig. 11, where the shutters cover a significant portion of the facade because there is a large glass area in the windows and doors, or as illustrated in Fig. 14 where a significant portion of the facade is not covered by shutter units. The shutter units may thus also be utilized in the design of the architectural expression of the building. It is thus possible that the shutter units are mounted in fixed positions on the facade without necessarily having a window located behind the shutter unit.

When the slats are not fixed in position but instead able to rotate between different inclinations, the individual frame part may be provided with one or two motors 37 used to rotate slats in order to regulate the inclination of the slat with respect to the sun. When two motors are used it is possible to group slats into an upper group used primarily to direct light into the room and a lower group used to primarily heat air drawn into the slats, see Fig. 13.

In the embodiment of Fig. 14 the building is provided with a sensor 38 registering outdoor temperatures, and for individual rooms a set of sensors comprising one or more of the following: a temperature sensor, a light intensity sensor, a CO₂ sensor, and a humidity sensor. A central control unit 42 receives signals from the sensors and regulates the operation of the window shutter units. It is possible to several central control units in one building and to group the window shutter units into several groups, and then associate the individual group with a specific central control unit. The inner architecture of the building decides how the units should be grouped, and one example is to group all shutter units on an individual floor into one group. The control unit may control the fans in the shutter units and the motor 37. The window shutter units may also have drive devices for sliding the shutter frame in relation to the window, and in that case the central control unit 42 can control not only the ventilation and the temperature in the rooms, but also the shielding effects of the shutters. The control of the building is performed according to predefined control patterns and programs in the central control unit.

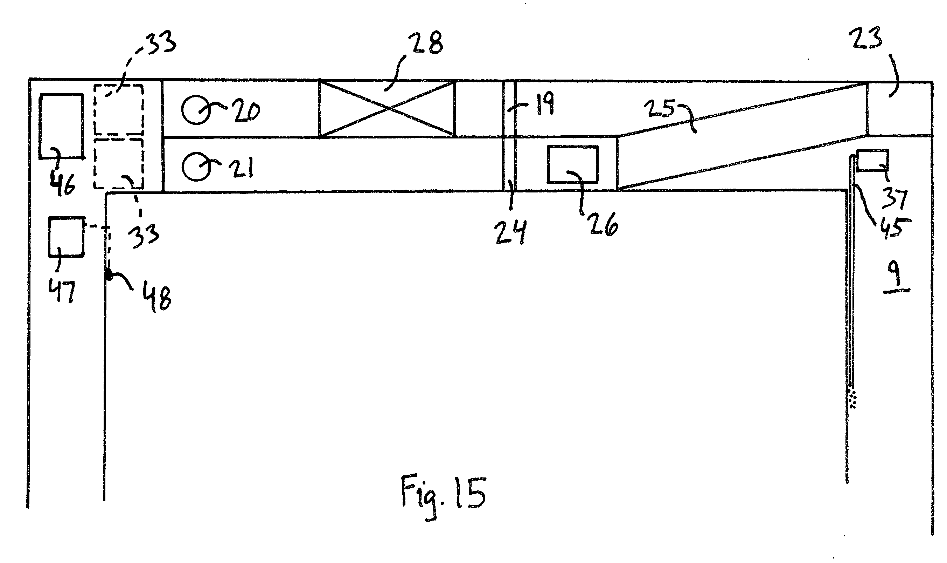

Fig. 15 illustrates the housing 7 in a further embodiment having a battery 46 within the housing in order to have a power source also during night time, or a power source in addition to external power provided from the building. The window shutter unit 1 may have a control unit 47 connected to one or more sensors 48 of the above-mentioned type. The local control unit provide automatic functions to the shutter unit, or alternatively to several shutter units serving a single room, and is as such capable of controlling ventilation, temperature and light within this single room.

On a building any number of window shutter units may be integrated into a common temperature control and ventilation system. The common system may utilize one or more central units for conditioning air and/or utilizing heat produced by the window shutter units. The common system may also perform a specific function relevant to the operation of the individual window shutter unit, such as cooling of air.

A window shutter unit may be sized to cover more than one window, and it may cover a plurality of windows. A window shutter unit may also be designed to cover a wall section next to a window, but not the window.

The above-mentioned embodiments can be combined into further embodiments within the scope of the claims, and details from embodiments can also be combined into further embodiments within the scope of the claims. As an example, the interior of the second frame member 4 can be in flow connection with a general intake opening for outside air, and the interior of the second frame member can distribute outside air to the second air flow passage 43 in the individual hollow slat. The second air flow passage then includes an air inlet opening to the hollow slat. Such an embodiment may be advantageous in areas having insectsbecause the outside air taken in through the general intake opening can be filtered by passing a central filter at the opening before being distributed to the slats via the interior of the frame member.

### Example 1

An aluminum shutter frame made of three hollow frame members having a square cross-section with a side length of 6 cm and an upper frame member having a cross-section of 6 cm x 20 cm was built in a width of 100 cm and a height of 220 cm. Hollow aluminum slats having a width of 8 cm were mounted to the frame. Each slat has a single slit in the lower edge of the slat. The upper frame member was provided with a fan. Testing was performed in accordance with the standard EN 12975-2. Results of the testing is presented in Table 1 where each line in the table represents the average of the values recorded during a full day from about 0600 hours in the morning to about 1700 hours in the afternoon. The measuring site was at the position 55° 47' 28" N, 12° 31' 33" E and measurements were performed in September and October.

**Table 1**

| Day | Outside air T_{amb} °C | Ventilation air T °C | Air amount m³/h | Sun energy W/m² | Efficiency |
|---|---|---|---|---|---|
| 1 | 17.6 | 39.5 | 63 | 996 | 0.20 |
| 2 | 19.3 | 35.5 | 141 | 885 | 0.39 |
| 3 | 21.5 | 36.9 | 200 | 821 | 0.57 |
| 4 | 17.6 | 29.3 | 198 | 904 | 0.39 |

The efficiency is seen to be high, in particular when the flow of air through the slats is high.

## Claims

1. A window shutter unit (1) for external mounting on a building, which window shutter unit comprises a plurality of hollow slats (2) mounted to frame members (3, 4) in a shutter frame, an air outlet opening (20) for delivering ventilation air to a room in the building, and a fresh air inlet system for taking in outside air and conveying the air to the air outlet opening, **characterized in that** at least a first one of the frame members (3, 4) of the shutter frame is hollow with an interior forming part of a common flow passage (9) leading to the air outlet opening, that the fresh air inlet system comprises air inlet openings (10) in the hollow slats, and a first air flow passage (8) from the individual slat to the common flow passage, which first air flow passage (8) is located at the end of the individual slat and extends to the interior of the first frame member.

2. A window shutter unit according to claim 1, **characterized in that** also a second of the frame members (3, 4) of the shutter frame is hollow, and that a second air flow passage (43) is located at an end of the individual slat (2) and extends to the interior of the second frame member.

3. A window shutter unit according to any of claims 1 to 2, **characterized by** comprising an air discharge opening (21) for ventilating air out of the room in the building, and a discharge passage from the air discharge opening to an external air discharge (23).

4. A window shutter unit according to claims 2 and 3, **charac** - **terized** by comprising a flow control device directing air ventilated out of the room through the air discharge opening (21) either through the discharge passage to the external air discharge (23) or through a recirculation passage including the interior of the second frame member (4).

5. A window shutter unit according to claim 3, **characterized in that** a heat exchange device (25) is included in the discharge passage (22) and the common flow passage (9).

6. A window shutter unit according to any of the claims 1 to 5, **characterized by** comprising solar cell devices for producing electrical energy to drive at least one electric fan motor in the window shutter unit.

7. A window shutter unit according to any of the claims 1 to 6, **characterized in that** a heat energy device (28) to cool or heat air is in flow connection with the common flow passage (9) leading to the air outlet opening.

8. A window shutter unit according to any of the claims 1 to 7, **characterized in that** at least some of the slats (2) can rotate with respect to the frame members (3, 4) and thus adjust their inclination with respect to the sun.

9. A window shutter unit according to any of the claims 1 to 8, **characterized in that** at least some of the slats (2) are provided with an outer side wall (16) of transparent material, preferably so that the outside air has to flow under and across the transparent material in order to reach the air inlet openings (10) in the slat.

10. A window shutter unit according to any of the claims 1 to 9, **characterized in that** at least some of the slats are provided with solar film devices (17) for producing electrical energy.

11. A window shutter unit according to any of the claims 1 to 10, **characterized by** comprising a stationary part (7) for mounting on the building and at least one shutter frame part capable of moving with respect to the stationary part between a position next to the window and a position in front of the window.

12. A window shutter unit according to any of the claims 1 to 11, **characterized in that** fans (19) and control motors (37) in the window shutter unit are supplied entirely with electrical energy produced by the window shutter unit.

13. A window shutter unit according to any of the claims 1 to 11, **characterized in that** two sides (11) of the individual slat (2) extend between an upper edge area (12) and a lower edge area (13), and the air inlet openings (10) in the slat are located in one of the edge areas, preferably in the lower edge area.

14. A building supplied on one or more facades with a plurality of window shutter units according to any of claims 1 to 12, wherein a central control unit (42) controls window shutter units (1) to regulate the ventilation, the temperature and the amount of daylight in one or more of the rooms.

15. A building according to claim 14, wherein one or more of the rooms have no other built-in heating and/or ventilation system than the window shutter units (1).

## Patentansprüche

1. Fensterrollladeneinheit (1) zur Außenmontage an einem Gebäude, wobei die Fensterrollladeneinheit mehrere hohle Lamellen (2), die an Rahmenelementen (3, 4) in einem Rollladenrahmen angebracht sind, eine Luftauslassöffnung (20) zur Lieferung von Belüftungsluft in einen Raum in dem Gebäude, und ein Frischlufteinlasssystem zum Aufnehmen von Außenluft und Befördern der Luft zu der Luftauslassöffnung umfasst, **dadurch gekennzeichnet, dass** zumindest ein erstes der Rahmenelemente (3, 4) des Rollladenrahmens hohl ist, wobei ein Inneres einen Teil eines gemeinsamen Fließdurchgangs (9) bildet, der zu der Luftauslassöffnung führt, dass das Frischlufteinlasssystem Lufteinlassöffnungen (10) in den hohlen Lamellen und einen ersten Luftfließdurchgang (8) von der einzelnen Lamelle zu dem gemeinsamen Fließdurchgang umfasst, wobei sich der erste Luftfließdurchgang (8) an dem Ende der einzelnen Lamelle befindet und sich zu dem Inneren des ersten Rahmenelements erstreckt.

2. Fensterrollladeneinheit nach Anspruch 1, **dadurch gekennzeichnet, dass** auch ein zweites der Rahmenelemente (3, 4) des Rollladenrahmens hohl ist, und dass sich ein zweiter Luftfließdurchgang (43) an einem Ende der einzelnen Lamelle (2) befindet und sich zu dem Inneren des zweiten Rahmenelements erstreckt.

3. Fensterrollladeneinheit nach einem der Ansprüche 1 bis 2, **dadurch gekennzeichnet, dass** sie eine Luftauslassöffnung (21) zum Entlüften von Luft aus dem Raum in dem Gebäude und einen Auslassdurchgang von der Luftauslassöffnung zu einem äußeren Luftauslass (23) umfasst.

4. Fensterrollladeneinheit nach Anspruch 2 und 3, **dadurch gekennzeichnet, dass** sie eine Durchflusssteuervorrichtung umfasst, die Luft, welche durch die Luftauslassöffnung (21) aus dem Raum entlüftet wurde, entweder durch den Auslassdurchgang zu dem äußeren Luftauslass (23) oder durch einen Rückführungsdurchgang, der das Innere des zweiten Rahmenelements (4) beinhaltet, richtet.

5. Fensterrollladeneinheit nach Anspruch 3, **dadurch gekennzeichnet, dass** in dem Auslassdurchgang (22) und dem gemeinsamen Fließdurchgang (9) eine Wärmeaustauschvorrichtung (25) enthalten ist.

6. Fensterrollladeneinheit nach einem der Ansprüche 1 bis 5, **dadurch gekennzeichnet, dass** sie Solarzellenvorrichtungen zur Erzeugung von elektrischer Energie zum Antrieb zumindest eines elektrischen Gebläsemotors in der Fensterrollladeneinheit umfasst.

7. Fensterrollladeneinheit nach einem der Ansprüche 1 bis 6, **dadurch gekennzeichnet, dass** eine Wärmeenergievorrichtung (28) zum Kühlen oder Erwärmen von Luft in einer Fließverbindung mit dem gemeinsamen Fließdurchgang (9), der zu der Luftauslassöffnung führt, steht.

8. Fensterrollladeneinheit nach einem der Ansprüche 1 bis 7, **dadurch gekennzeichnet, dass** sich zumindest einige der Lamellen (2) in Bezug auf die Rahmenelemente (3, 4) drehen können und dadurch ihre Neigung in Bezug auf die Sonne einstellen können.

9. Fensterrollladeneinheit nach einem der Ansprüche 1 bis 8, **dadurch gekennzeichnet, dass** zumindest einige der Lamellen (2) vorzugsweise so mit einer äußeren Seitenwand (16) aus einem transparenten Material versehen sind, dass die Außenluft unter dem transparenten Material und über dieses fließen muss, um die Lufteinlassöffnungen (10) in der Lamelle zu erreichen.

10. Fensterrollladeneinheit nach einem der Ansprüche 1 bis 9, **dadurch gekennzeichnet, dass** zumindest einige der Lamellen mit Solarfilmvorrichtungen (17) zur Erzeugung von elektrischer Energie versehen sind.

11. Fensterrollladeneinheit nach einem der Ansprüche 1 bis 10, **dadurch gekennzeichnet, dass** sie einen stationären Teil (7) zur Montage an dem Gebäude und zumindest einen Rollladenrahmenteil, der in der Lage ist, sich in Bezug auf den stationären Teil zwischen einer Position neben dem Fenster und einer Position vor dem Fenster zu bewegen, umfasst.

12. Fensterrollladeneinheit nach einem der Ansprüche 1 bis 11, **dadurch gekennzeichnet, dass** Gebläse (19) und Steuermotoren (37) in der Fensterrollladeneinheit zur Gänze mit elektrischer Energie, die durch die Fensterrollladeneinheit erzeugt wird, versorgt werden.

13. Fensterrollladeneinheit nach einem der Ansprüche 1 bis 11, **dadurch gekennzeichnet, dass** sich zwei Seiten (11) der einzelnen Lamelle (2) zwischen einem oberen Randbereich (12) und einem unteren Randbereich (13) erstrecken, und sich die Lufteinlassöffnungen (10) in der Lamelle in einem der Randbereiche, vorzugsweise in dem unteren Randbereich, befinden.

14. Gebäude, das an einer oder mehreren Fassaden mit mehreren Fensterrollladeneinheiten nach einem der Ansprüche 1 bis 12 versehen ist, wobei eine zentrale Steuereinheit (42) die Fensterrollladeneinheiten (1) steuert, um die Lüftung, die Temperatur und die Menge an Tageslicht in einem oder mehreren der Räume zu regulieren.

15. Gebäude nach Anspruch 14, wobei einer oder mehrere der Räume kein anderes integriertes Heiz- und/oder Lüftungssystem als die Fensterrollladeneinheiten (1) aufweist.

## Revendications

1. Unité de persienne (1) de fenêtre à monter à l'extérieur d'un bâtiment, laquelle unité de persienne de fenêtre comprend une pluralité de lames creuses (2) montées sur les montants (3, 4) de cadre dans une armature de persienne, une ouverture (20) de sortie d'air pour fournir de l'air de ventilation à une pièce dans le bâtiment et un système d'entrée d'air frais pour faire entrer de l'air extérieur et l'acheminer jusqu'à l'ouverture de sortie d'air,
**caractérisé en ce qu'**au moins un premier des montants (3, 4) de cadre dans l'armature de persienne est creux avec un intérieur formant partie d'un passage commun (9) d'écoulement conduisant à l'ouverture de sortie d'air, et que le système d'entrée d'air frais comprend des ouvertures (10) d'entrée d'air dans les lames creuses et un premier passage (8) d'écoulement d'air de la lame individuelle au passage commun d'écoulement, lequel premier passage (8) d'écoulement d'air est situé à une extrémité de la lame individuelle et pénètre à l'intérieur du premier montant de cadre.

2. Unité de persienne de fenêtre selon la revendication 1, **caractérisée en ce qu'**également le second des montants (3, 4) de cadre dans l'armature de persienne est creux, et qu' un second passage (43) d'écoulement d'air est situé à une autre extrémité de la lame individuelle (2) et pénètre à l'intérieur du second montant de cadre.

3. Unité de persienne de fenêtre selon la revendication 1 ou 2, **caractérisée en ce qu'**elle comprend une ouverture (21) d'évacuation d'air pour ventiler l'air hors de la pièce dans le bâtiment et un passage d'évacuation allant de l'ouverture d'évacuation d'air à une évacuation externe (23) d'air.

4. Unité de persienne de fenêtre selon les revendications 2 et 3, **caractérisée en ce qu'**elle comprend un dispositif de commande d'écoulement dirigeant l'air ventilé hors de la pièce par l'ouverture (21) d'évacuation d'air soit via le passage d'évacuation allant vers l'évacuation externe (23) d'air soit via un passage de recirculation comprenant l'intérieur du second montant (4) de cadre.

5. Unité de persienne de fenêtre selon la revendication 3, **caractérisée en ce qu'**un dispositif (25) d'échange thermique est inclus dans le passage d'évacuation (22) et le passage commun (9) d'écoulement.

6. Unité de persienne de fenêtre selon l'une quelconque des revendications 1 à 5, **caractérisée en ce qu'**elle comprend des dispositifs de cellules solaires pour produire de l'énergie électrique afin de faire marcher au moins un moteur électrique de ventilateur dans l'unité de persienne de fenêtre.

7. Unité de persienne de fenêtre selon l'une quelconque des revendications 1 à 6, **caractérisée en ce qu'**un dispositif (28) d'énergie thermique pour rafraîchir ou chauffer l'air est en communication fluidique avec le passage commun (9) d'écoulement conduisant à l'ouverture de sortie d'air.

8. Unité de persienne de fenêtre selon l'une quelconque des revendications 1 à 7, **caractérisée en ce qu'**au moins quelques-unes des lames (2) peuvent tourner par rapport aux montants (3, 4) de cadre et donc régler leur inclinaison par rapport au soleil.

9. Unité de persienne de fenêtre selon l'une quelconque des revendications 1 à 8, **caractérisée en ce qu'**au moins quelques-unes des lames (2) sont pourvues d'une paroi latérale extérieure (16) en matière transparente, de préférence de sorte que l'air extérieur doive circuler sous et à travers la matière transparente afin d'atteindre les ouvertures (10) d'entrée d'air dans la lame.

10. Unité de persienne de fenêtre selon l'une quelconque des revendications 1 à 9, **caractérisée en ce qu'**au moins quelques-unes des lames sont pourvues de dispositifs (17) de film solaire pour produire de l'énergie électrique.

11. Unité de persienne de fenêtre selon l'une quelconque des revendications 1 à 10, **caractérisée en ce qu'**elle comprend une pièce fixe (7) pour le montage sur le bâtiment et au moins une pièce d'armature de persienne pouvant se déplacer par rapport à la pièce fixe entre une position à côté de la fenêtre et une position en face de la fenêtre.

12. Unité de persienne de fenêtre selon l'une quelconque des revendications 1 à 11, **caractérisée en ce que** les ventilateurs (19) et les moteurs de commande (37) dans l'unité de persienne de fenêtre sont alimentés entièrement par l'énergie électrique produite par l'unité de persienne de fenêtre.

13. Unité de persienne de fenêtre selon l'une quelconque des revendications 1 à 11, **caractérisée en ce que** les deux côtés (11) de la lame individuelle (2) s'étendent entre une zone de bord (12) supérieure et une zone de bord (13) inférieure et les ouvertures (10) d'entrée d'air dans la lame sont situées dans l'une des zones de bord, de préférence dans la zone de bord inférieure.

14. Bâtiment équipé sur une ou plusieurs façades d'une pluralité d'unités de persienne de fenêtre selon l'une quelconque des revendications 1 à 12, dans lequel une unité centrale (42) de commande contrôle les unités de persienne (1) de fenêtre pour réguler la ventilation, la température et la quantité de lumière du jour dans un ou plusieurs des pièces.

15. Bâtiment selon la revendication 14, dans lequel une ou plusieurs des pièces n'ont pas d'autre système intégré de chauffage et/ou de ventilation que les unités de persienne (1) de fenêtre.
